# FASCICULE DE BREVET EUROPEEN

(11) **EP 1 987 380 B1**
(45) Date de publication et mention de la délivrance du brevet: **05.04.2017**
(21) Numéro de dépôt: 07731019.1
(22) Date de dépôt: 21.02.2007
(51) Int. Cl.: G02B 5/30, G02B 1/04, B29D 11/00

(54) **ELEMENT OPTIQUE POLARISANT COMPRENANT UN FILM POLARISEUR ET PROCEDE DE FABRICATION D'UN TEL ELEMENT**
OPTISCHES POLARISIERUNGSELEMENT MIT POLARISIERUNGSFILM UND HERSTELLUNGSVERFAHREN DAFÜR
POLARIZING OPTICAL ELEMENT COMPRISING A POLARIZING FILM AND METHOD FOR MAKING SAME

(30) Priorité: 23.02.2006 FR 0601608
(43) Date de publication de la demande: 05.11.2008
(73) Titulaire: ESSILOR INTERNATIONAL (COMPAGNIE GENERALE D'OPTIQUE), 94220 Charenton-le-Pont (FR)
(72) Inventeur: BEGON, Cédric, F-94220 Charenton-le-Pont (FR); ROOS, Alexandra, F-94220 Charenton le Pont (FR)
(74) Mandataire: Cabinet Plasseraud
(86) Numéro de dépôt international: PCT/FR2007/000312
(87) Numéro de publication internationale: WO 2007/096521

(56) Documents cités:
- EP-A- 1 217 397
- FR-A- 2 183 109
- US-A- 4 388 375
- US-A1- 2001 028 435
- US-A1- 2001 038 438
- US-A1- 2002 044 352
- US-A1- 2003 063 255
- US-A1- 2003 067 568
- US-B1- 6 413 641
- PATENT ABSTRACTS OF JAPAN vol. 2003, no. 12, 5 décembre 2003 (2003-12-05) -& JP 2004 010647 A (HITACHI CHEM CO LTD), 15 janvier 2004 (2004-01-15)

## Description

La présente invention concerne un élément optique polarisant qui comprend un film polariseur à colorants dichroïques. Elle concerne aussi un procédé de fabrication d'un tel élément optique polarisant. L'élément optique polarisant peut être, en particulier, une lentille ophtalmique.

Il est connu de réaliser un élément optique polarisant en associant un film polariseur à base d'alcool polyvinylique, ou PVA pour «polyvinylalcool», avec un élément optique de base. L'élément optique de base est, le plus souvent, une lentille optique.

En effet, des films polariseurs à base de polyvinyl alcool sont disponibles commercialement depuis longtemps, et présentent des efficacités de polarisation satisfaisantes. De tels films polariseurs sont obtenus classiquement en incorporant des molécules de colorants dichroïques et/ou des cristaux d'iode dichroïques dans un film à base d'alcool polyvinylique, puis en étirant le film uniaxialement de façon à orienter les molécules de colorants dichroïques et/ou les cristaux d'iode dichroïques selon la direction d'étirement. On entend par colorant dichroïque une espèce pouvant être de nature moléculaire ou cristalline et présentant une absorption privilégiée du rayonnement électromagnétique visible pour une orientation spatiale particulière. Les films polariseurs ainsi obtenus sont peu onéreux et possèdent une qualité optique qui est compatible avec de nombreuses applications, notamment des applications ophtalmiques. D'autres substrats que le PVA peuvent également être retenus pour pratiquer cette technique d'orientation de colorants dichroïques par étirement uniaxial. On peut notamment citer par exemple le polyéthylène téréphtalate ou PET.

Une première difficulté de la réalisation d'un élément optique qui incorpore un film polariseur réside dans l'obtention d'une cohésion suffisante et durable entre l'élément optique de base et le film polariseur.

Une deuxième difficulté est de maîtriser le positionnement du film polariseur par rapport aux faces de l'élément optique de manière à ne pas perturber le trajet de faisceau lumineux à travers l'élément optique. Ceci est important pour obtenir une qualité optique élevée et homogène sur toute la surface pour le produit polarisant final, dans la mesure où l'indice du film polariseur est généralement différent de l'indice du matériau constituant l'élément optique. Il est souhaitable en pratique d'avoir un excellent parallélisme entre la face de l'élément optique la plus proche du film polariseur et la surface du film polariseur.

Pour cela, deux procédés sont utilisés pour fabriquer un élément optique à film polariseur, en fonction de la nature du matériau de l'élément optique de base.

Le premier procédé est utilisé lorsque l'élément optique de base est constitué d'un matériau thermodurcissable. Le film polariseur, généralement préformé à la courbure souhaitée, est placé à l'intérieur du moule de l'élément optique de base, à distance de deux surfaces opposées du moule. Le liquide de monomères du matériau thermodurcissable est alors versé dans le moule, de part et d'autre du film polariseur. Il est ensuite polymérisé en chauffant le moule contenant le liquide et le film polariseur. On obtient un élément polarisant qui incorpore ainsi dans son épaisseur de façon durable un film polariseur. Usuellement, la polymérisation est obtenue en chauffant le moule à une température maximale comprise entre 90°C et 130°C (degré Celsius), pendant une durée d'environ 20 heures. De tels paramètres de polymérisation sont notamment utilisés lorsque le matériau à polymériser est du diéthylène glycol bis(allylcarbonate) plus connu sous le nom de CR39. Mais un tel chauffage peut altérer le film polariseur d'une façon non-contrôlée : la teinte du film polariseur peut varier et/ou l'efficacité de polarisation du film peut être diminuée à l'issue du procédé et/ou la stabilité dimensionnelle du film peut être altérée. Une telle variation dimensionnelle, même faible, et/ou un léger défaut de préhension du film induit des contraintes dans le film polariseur engendrant une non-uniformité en polarisation sur l'ensemble de la surface du film. En outre, la position du film polariseur à l'intérieur du moule est susceptible d'être affectée par la méthode de remplissage du moule avec le liquide de monomères de part et d'autre du film, de sorte qu'après polymérisation la position du film par rapport à la face avant de la lentille peut fluctuer de façon non contrôlée d'une zone de l'élément optique obtenu à une autre. De telles fluctuations sont nuisibles à la précision qui est nécessaire pour certaines applications, telles que la fabrication d'un verre ophtalmique. D'autre part, il est particulièrement ardu avec ce procédé d'assurer le parallélisme entre une face du moule et la surface du film polariseur, ce qui se révèle pénalisant pour la fabrication de verres ophtalmiques polarisant de type progressif dont le rayon de courbure varie continûment à la surface de l'élément optique.

Le second procédé de fabrication d'un élément optique à film polariseur est utilisé lorsque l'élément optique de base est constitué d'un matériau thermoplastique tel que, par exemple, du polycarbonate, du polyamide ou du polyméthacrylate de méthyle (PMMA). Le film polariseur est placé à l'intérieur d'un moule d'injection, contre une face de celui-ci, puis le matériau thermoplastique chauffé est injecté sous pression. La température du matériau injecté, au moment de son introduction dans le moule, est élevée, par exemple typiquement comprise entre 270 °C et 320 °C pour le cas d'un matériau en polycarbonate. Pour obtenir de cette façon un élément optique polarisant de qualité acceptable dans le cas où le matériau du film polariseur uniaxiallement étiré est à base de PVA, il est nécessaire que le film polariseur de PVA soit initialement laminé entre deux films de protection, par exemple deux films en polycarbonate chacun d'épaisseur 0,4 mm. Les films protecteurs du PVA amènent la cohésion mécanique qui permet au film polariseur de PVA de supporter la pression élevée d'injection et assurent également un rôle de protection thermique contre la température élevée du matériau thermoplastique injecté. Ce rôle est d'autant mieux assuré que l'épaisseur du film de protection est élevée. Cependant, il est à noter que durant l'injection le film polariseur peut subir des déformations non-contrôlées, en même temps qu'il est susceptible d'être altéré par la température élevée du matériau injecté. Il est important de plus que l'un de ces films assure aussi une bonne cohésion avec le matériau injecté de l'élément optique, en fusionnant, par exemple, avec ce dernier au niveau de leur surface de contact. En outre, le film de protection qui recouvre le film polariseur du côté opposé à l'élément optique en matériau injecté ne doit pas présenter de biréfringence importante car, dans ce cas, l'efficacité de polarisation de l'élément optique qui est finalement obtenu peut être réduite. Ceci limite la variété de film polariseur pouvant être mise en oeuvre dans ce type de procédé.

Par ailleurs, les documents EP 1 217 397, US 2002/044352, US 2003/067568 et US 2003/063255 divulguent des éléments optiques polarisants qui incorporent un film polariseur, ce film polariseur contenant un colorant dichroïque, étant orienté, et étant retenu sur la surface d'un élément optique de base par une couche d'un matériau adhésif sensible à la pression.

Un but de la présente invention consiste donc à proposer un nouveau procédé de fabrication d'un élément optique polarisant, qui soit peu onéreux, simple, sans étape de chauffage prolongée, et qui présente une bonne qualité optique grâce à la maîtrise de la distance séparant le film polariseur de la face la plus proche de l'élément optique, y compris pour la fabrication de verres ophtalmiques de type progressif.

Pour cela, l'invention propose un procédé de fabrication selon la revendication 1 ou la revendication 2.

Au sens de l'invention par élément optique de base on entend un élément transparent incolore ou teinté présentant un taux de transmission dans le spectre de la lumière visible (Tv) compris entre 100% et 8%.

Au sens de l'invention par "structure en couche(s) qui incorpore au moins un film polariseur", on entend soit une structure comprenant uniquement un film polariseur à base de PVA ou PET, par exemple, soit une structure comprenant un film polariseur comprenant au moins sur une de ses faces un film de protection. Dans le reste de la description ladite structure en couche(s) est également dénommée structure polarisante.

Au sens de l'invention par structure en couche(s) comprenant au moins une couche d'un matériau adhésif sensible à la pression, on entend une structure comprenant soit une seule couche d'un matériau adhésif sensible à la pression, soit une structure comprenant plusieurs couche(s) successives de matériau adhésif sensible à la pression, chacune desdites couche(s) étant identiques ou différentes. Dans cette variante, une couche intercalaire peut optionnellement être présente entre deux couche(s) de matériau sensible à la pression. Ainsi une structure en couche(s) comprenant une première couche d'un matériau adhésif sensible à la pression, une couche intercalaire, une seconde couche d'un matériau sensible à la pression fait pleinement partie de l'invention. Dans le reste de la description ladite structure en couche(s) est également appelée structure adhésive.

Dans un élément optique polarisant fabriqué selon l'invention, la fonction de polarisation est apportée par un film contenant des colorants dichroïques orientés. Ce film polariseur fait partie d'une structure en couche(s) qui peut être d'un modèle couramment disponible et à faible coût. Cette structure est collée sur l'élément optique de base en utilisant une structure en couche(s) comprenant au moins une couche d'un matériau adhésif sensible à la pression. L'association du film polariseur avec l'élément optique de base est donc effectuée par simple mise en contact du film polariseur à la surface de l'élément optique, via au moins une couche d'un matériau adhésif sensible à la pression, suivie de l'application d'une pression. Elle peut être réalisée rapidement et sans utiliser d'outil complexe contrairement a ce qui serait requis pour le maintien du film à une distance contrôlée de la surface de l'élément optique.

L'élément optique de base peut être un composant usuel tel que, notamment, une lentille ophtalmique, une visière de casque, un élément d'optique de visée ou de mesure, etc. Le collage de la structure en couche(s) polarisante intervient donc indépendamment de la fabrication de l'élément optique de base et de sa nature thermodurcissable ou thermoplastique, ce qui procure une souplesse considérable pour l'apport de la fonction de polarisation. En particulier, le film polariseur peut être associé à l'élément optique de base à proximité du lieu du vendeur détaillant, voire en fonction d'une demande particulière d'un client. Il en résulte une gestion de stock simplifiée.

Dans le cas d'une lentille ophtalmique, la structure en couche(s) polarisante est préférentiellement située sur la face antérieure de cette lentille (usuellement dénommée face avant de la lentille ophtalmique), de sorte que la biréfringence éventuelle de l'élément optique de base ne réduise pas l'efficacité de polarisation de la lentille, lorsqu'elle est utilisée pour la vision. Au sens de l'invention par lentille ophtalmique, on entend les lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives ;

Selon l'invention, l'utilisation d'une structure en couche comprenant au moins une couche de matériau adhésif sensible à la pression, ou PSA pour «Pressure Sensitive Adhesive» en anglais, est particulièrement avantageuse car elle permet d'appliquer sur la surface de l'élément optique de base la structure en couche(s) comprenant le film polariseur de façon simple et peu coûteuse, tout en préservant les propriétés dioptriques de l'élément optique. En effet tous les PSA ont en commun de présenter une propriété adhésive permanente (dénommée « tack » ou « tackiness » en anglais ) et un module élastique faible à température ambiante , typiquement compris entre 10³ et 10⁷ Pa (Pascals). Il est remarquable que le mécanisme d'adhésion mis en jeu avec un tel matériau adhésif ne fait pas intervenir de liaison chimique mais exploite les propriétés viscoélastiques particulières du matériau PSA. Ces propriétés intrinsèques à chaque formulation de PSA permettent notamment d' établir à l'interface de collage des interactions électrostatiques de Van der Waals. C'est ce qui se produit lorsque le PSA est mis au contact d'un matériau solide avec une pression - la pression appliquée et le faible module du matériau PSA permettant de garantir un contact intime du PSA à l'échelle moléculaire avec la topologie du matériau à coller. D'autre part, les propriétés viscoélastiques volumiques du PSA permettent de dissiper dans l'épaisseur de la couche adhésive l'énergie amenée par des sollicitations mécaniques de l'interface de collage, et donc de résister aux mécanismes de décollement.

De plus, la possibilité de déposer le matériau adhésif PSA sous forme d'une couche équiépaisse fine dont l'épaisseur est comprise entre 0,5 microns et 300 microns permet lorsque l'élément optique de base est une lentille optique ou ophtalmique de ne pas altérer sa puissance nominale quelle que soit la zone spatiale concernée de l'élément optique. De cette façon, le collage du film polariseur est compatible avec la précision qui est nécessaire lorsque l'élément optique de base est une lentille ophtalmique progressive.

L'utilisation d'un matériau adhésif sensible à la pression ne nécessite pas d'utiliser une irradiation, par exemple par un rayonnement ultraviolet, ni un chauffage intensif pour obtenir un collage permanent. Ainsi, le film polariseur n'est pas altéré ni dégradé par une telle irradiation ou un tel chauffage.

Plusieurs matériaux adhésifs sensibles à la pression peuvent être utilisés pour constituer la structure en couche(s) de matériaux adhésifs sensibles à la pression. Avantageusement le matériau adhésif sensible à la pression qui est utilisé est choisi parmi un composé à base de polyacrylate, un copolymère à blocs à base de styrène et un mélange incorporant un caoutchouc naturel. Plus particulièrement, on peut citer à tire d'exemples et de façon non limitative, les PSA de compositions générales à base de polyacrylates, polyméthacrylates, à base de copolymères éthylèniques tels que les éthylène vinyl acétates, éthylène éthyle acrylates, et éthylène éthyle méthacrylates, les PSA à base de caoutchouc synthétique et élastomères incluant les silicones, les polyuréthanes, les styrènes butadiènes, les polybutadiènes, les polyisoprènes, les polypropylènes, les polyisobutylènes, les PSA à base de polymères comprenant des nitriles ou acrylonitriles, les PSA à base de polychloroprène, les PSA à base de copolymères à blocs comprenant polystyrène, polyéthylène, polypropylène, polyisoprène, polybutadiène, les PSA à base de copolymères polyvinylpyrrolidone et vinylpyrrolidone ainsi que les compositions ou mélanges (de phases continues ou discontinues) des précédents, ainsi que des copolymères à blocs obtenus à partir des précédents. Ces PSA peuvent également comprendre au sein de leur formulation un ou plusieurs additifs choisis notamment parmi les agents de pégosité (tackifier), les plastifiants, les liants, les antioxydants, les stabilisants, les pigments, les colorants, les agents dispersants, et les agents diffusants. D'une façon préférentielle dans le cadre de l'invention on utilisera un PSA à base de polyacrylate.

Préférentiellement, la structure adhésive possède une épaisseur globale comprise entre 0,5 et 300 microns, préférentiellement entre 2 et 100 microns afin d'assurer un collage efficace en conservant une épaisseur régulière.

De préférence, le film polariseur est à base de polyvinyl alcool, ou PVA avec une épaisseur typiquement comprise entre 5 et 200 microns. Alternativement, il peut être à base de polyéthylène téréphtalate, ou PET avec une épaisseur typiquement comprise entre 50 et 500 microns. De tels films polariseurs, qui peuvent présenter une efficacité de polarisation élevée, sont en effet disponibles commercialement.

L'élément optique de base peut comprendre une portion d'un matériau à base d'au moins un composé polycarbonate, d'au moins un composé polyamide, de polymères ou copolymères de diéthylène glycol bis(allylcarbonate), de polymères ou copolymères de thiouréthane, ou de polymère ou copolymère d'épisulfure. Néanmoins, grâce à l'utilisation d'une couche de matériau adhésif sensible à la pression, l'invention peut être mise en oeuvre avec des éléments optiques de base constitués d'un matériau quelconque, minéral, organique, ou éventuellement composite. D'une façon générale, l'invention est aisément mis en oeuvre lorsque l'élément optique de base comprend un ou plusieurs polymères choisis parmi polycarbonates; polyamides ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy; et polymères et copolymères épisulfure.

L'invention permet notamment de réaliser un élément optique polarisant qui présente une épaisseur réduite par rapport aux épaisseurs accessibles via les deux procédés de fabrication traditionnels déjà mentionnés à savoir le moulage d'une résine thermodurcissable de part et d'autre d'un film polariseur, et d'autre part l'injection d'un polymère thermoplastique contre un film polariseur sur lequel sont laminés deux films protecteurs. La possibilité d'obtenir une lentille polarisante de faible épaisseur est particulièrement avantageuse dans le cas ou la lentille est une lentille ophtalmique correctrice d'amétropie, dans la mesure où une réduction d'épaisseur de la lentille s'accompagne d'une réduction de poids, ce qui procure un confort supérieur au porteur de la lentille pour une utilisation prolongée. L'invention peut donc être combinée de façon particulièrement avantageuse avec l'utilisation, en tant qu'élément optique de base, d'une lentille correctrice d'amétropie à haut indice de réfraction, par exemple au moins égal à 1,60.

Selon un mode de réalisation préféré de l'invention, la structure polarisante comprend en outre au moins un film de protection du film polariseur. Un tel film de protection évite que le film polariseur soit dégradé lors de son association avec l'élément optique de base, par exemple, par déchirement involontaire, par rayure ou par diffusion d'une substance étrangère dans le matériau du film polariseur. En outre, le film de protection facilite à manipulation de la structure polarisante, par renfort et raidissement de celle-ci par rapport au cas d'un film polariseur manipulé isolément.

Lorsque la structure polarisante ne comprend qu'un seul film de protection, celui-ci est disposé préférentiellement du côté du film polariseur qui est opposé à l'élément optique de base. En effet, au sein de l'élément optique polarisant finalement obtenu, le film polariseur est alors enserré entre le film de protection et l'élément optique de base, de sorte qu'il est protégé sur ses deux faces contre des agressions chimiques, mécaniques ou des salissures. En outre, au moins un revêtement fonctionnel peut être disposé sur le film de protection. Un tel revêtement peut conférer à l'élément optique des fonctions supplémentaires, telles qu'une suppression de réflexions lumineuses, une protection contre des chocs ou des rayures, et/ou une protection contre des salissures. De tels revêtements peuvent en effet être disposés facilement sur le film de protection, étant donné que celui-ci est constitué d'un matériau inerte chimiquement. En particulier, le film de protection peut être à base de triacétate de cellulose (TAC), d'acétate-butyrate de cellulose (CAB), de polyéthylène téréphtalate (PET), de polycarbonate ou de polyamide.

La structure polarisante peut aussi comprendre deux films de protection, qui sont disposés de chaque côté du film polariseur. Une protection supérieure du film polariseur en résulte, notamment lorsque ladite structure en couche(s) n'est pas encore appliquée contre l'élément optique de base. En outre, une telle protection évite que des composants chimiques de la structure en couche(s) comprenant au moins un matériau adhésif sensible à la pression interagissent avec le film polariseur, ou inversement, et altèrent les propriétés optiques de celui-ci.

Dans un procédé de fabrication d'un élément optique polarisant conforme à l'invention, la structure polarisante est pressée contre la surface de l'élément optique de base, avec la structure adhésive disposée entre ladite structure polarisante et l'élément optique de base. La propriété adhésive permanente du PSA permet de choisir le moment où cette fonction est utilisée pour assurer le collage de la structure en couche(s) associée au film polariseur et son adhésion permanente et cohérente avec l'article optique. Une gestion de la chaîne de production est alors envisageable du fait de cette propriété permanente d'adhésion que possèdent les PSA, mais dont l'ensemble des propriétés n'est mis en oeuvre qu'après l'exercice d'une pression (de quelques kilogrammes par centimètre carré) entre le PSA et la structure en couche(s) associée au film polariseur que l'on souhaite coller.

D'autres particularités et avantages de la présente invention apparaîtront dans la description ci-après d'exemples de réalisation non limitatifs, en référence aux dessins annexés, dans lesquels :
- les figures 1 a-1 c sont des vues en coupe de trois éléments optiques polarisants fabriqués selon l'invention ;
- la figure 2 illustre un premier dispositif de pressage pouvant être utilisé dans un procédé de fabrication d'un élément optique polarisant conforme à l'invention ;
- les figures 3a-3c illustrent un second dispositif de pressage pouvant être utilisé dans un procédé de fabrication d'un élément optique polarisant conforme à l'invention ; et
- les figures 4a-4f illustrent différentes étapes d'un procédé de fabrication d'un élément optique polarisant conforme à l'invention, en utilisant le dispositif de pressage des figures 3a-3c ; et
- la figure 5 illustre une variante du dispositif de pressage représenté dans les figures 3a-3c, cette variante pouvant être utilisé dans un procédé de fabrication d'un élément optique polarisant conforme à l'invention.

Pour raison de clarté des figures, les dimensions des éléments représentés ne sont pas en proportion avec des dimensions ou des rapports de dimensions réels. En outre, des références identiques dans des figures distinctes désignent des éléments identiques, ou qui ont des fonctions identiques.

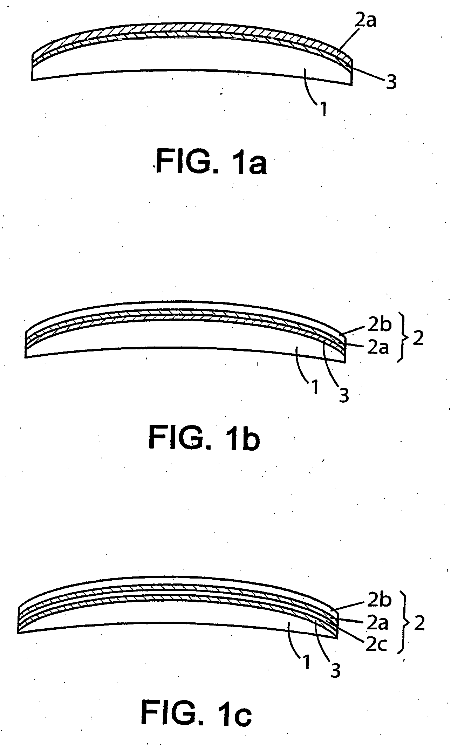

Conformément à la figure 1 a, une lentille ophtalmique 1 est recouverte par un film polariseur 2a sur sa face convexe, ou face antérieure en référence à l'orientation de la lentille lorsqu'elle est utilisée par un porteur. La lentille 1 peut être un verre correcteur d'amétropie, notamment du type verre progressif, constitué de polymères ou copolymères de diéthylène glycol bis(allylcarbonate). Un tel matériau est connu sous l'appellation commerciale CR39, et possède un indice de réfraction d'environ 1,5. La lentille 1 constitue l'élément optique de base.

Le film polariseur 2a peut être constitué principalement de polyvinyl alcool, ou PVA. Il contient en outre des colorants dichroïques qui peuvent comporter des molécules d'un ou plusieurs types, qui peuvent avoir été sélectionnées et incorporées au film selon des quantités déterminées pour obtenir une efficacité de polarisation et une coloration requises. Le film a ensuite été étiré selon une direction fixe, de façon à orienter uniaxialement les molécules de colorants dichroïques. L'effet de polarisation du film 2a résulte de cette orientation. Le film 2a peut avoir une épaisseur comprise entre 5 et 200 micromètres, par exemple de 40 micromètres.

Le film polariseur 2a est collé sur la surface convexe de la lentille 1 par une couche 3 d'un matériau adhésif sensible à la pression. La couche 3 peut être en polyacrylate, et présenter une épaisseur de 25 micromètres, par exemple. Elle assure, par collage, le maintien permanent du film polariseur 2a sur la surface convexe de la lentille 1.

Dans l'élément optique polarisant représenté sur la figure 1 b, le film polariseur 2a est recouvert d'un film de protection 2b, d'un côté du film 2a opposé à la lentille 1. De cette façon, le film polariseur 2a est protégé contre toute salissure ou rayure qui pourrait survenir pendant l'utilisation de l'élément optique. Le film de protection 2b peut être en triacétate de cellulose, par exemple, et posséder une épaisseur de 80 micromètres environ. Les films 2a et 2b constituent alors ensemble une structure en couche(s) polarisante 2 qui est portée par la lentille 1 sur sa face convexe. Eventuellement, des revêtements fonctionnels (non représentés) peuvent être disposés sur le film 2b, par exemple sur la face externe de celui-ci, pour conférer en plus à l'élément optique une fonction antichoc, une fonction antireflet, une fonction antiabrasion, une fonction antisalissure, une fonction anti-buée, une fonction antistatique ou une combinaison de certaines de ces fonctions.

Dans l'élément optique polarisant représenté sur la figure 1 c, la structure polarisante 2 comprend, outre le film polariseur 2a et le film de protection externe 2b, un second film de protection 2c. Les films 2b et 2c peuvent être identiques, et enserrent le film polariseur 2a de façon à assurer une protection de ce dernier sur ses deux faces. Le film de protection 2c est donc situé entre le film polariseur 2a et la couche de matériau adhésif 3.

Un premier procédé de fabrication d'un élément optique polarisant selon l'invention est maintenant décrit. Pour cette description, une structure polarisante 2 qui comprend un film polariseur 2a enserré entre deux films de protection 2b et 2c, telle que représentée sur la figure 1c, est prise à titre d'exemple. Une telle structure peut être achetée en rouleaux, puis découpée à des dimensions supérieures à celles de l'élément optique sur lequel elle est destinée à être collée.

Selon une première variante de ce procédé, la structure adhésive qui comprend une couche de matériau adhésif sensible à la pression 3 est d'abord déposée sur la face convexe de la lentille 1, puis la structure polarisante 2 est pressée sur la couche de matériau adhésif sensible à la pression 3, de façon à obtenir un assemblage définitif. Ce procédé est également applicable lorsque le matériau adhésif sensible à la pression est une structure adhésive telle que décrite précédemment. Avantageusement, la couche de matériau adhésif 3 se présente initialement sous forme d'une pellicule continue enserrée entre deux films de conditionnement pelable (dénommés « liner » en anglais). La couche 3 peut être alors transférée sur la face convexe de la lentille 1 en exécutant les étapes suivantes
/a1/peler l'un des deux films de conditionnement pelable de façon à découvrir une face de la couche 3 ;
/b1/ presser la face découverte de la couche 3 sur la face antérieure de la lentille 1, à travers l'autre des deux films de conditionnement pelable de la couche 3 ; et
/c1/ peler l'autre des deux films de conditionnement de façon à découvrir l'autre face de la couche 3.

La mise en oeuvre d'un tel matériau adhésif est particulièrement avantageuse d'un point de vue pratique. Ainsi lors de l'étape /b1/, la couche 3 est totalement protégée de toute altération mécanique, physique ou chimique, grâce à la présence permanente durant toute cette phase du second film de conditionnement pelable sur la face opposée de la couche 3 mise en contact avec la lentille 1.

Entre les étapes /a1/ et /b1/, le film de conditionnement pelable restant qui porte la couche de matériau adhésif 3 peut être chauffé, de façon à l'assouplir. L'étape /b1/ peut alors être exécutée plus facilement, étant donné que le film de conditionnement pelable restant et la couche 3 peuvent se déformer pour s'adapter à la forme de la face convexe de la lentille 1.

La couche 3 est alors portée par la lentille 1, sur la face convexe de celle-ci, et présente une face découverte sur laquelle la structure polarisante 2 est ensuite pressée lors d'une étape ultérieure /d1/ décrite plus loin. A l'issue de l'étape /b1 /, la lentille 1 ainsi munie de la couche 3 peut être transportée ou stockée, étant donné que le matériau adhésif sensible à la pression possède une capacité de collage permanente.

Selon une seconde variante du procédé de fabrication de l'élément optique polarisant, la couche de matériau adhésif 3 est d'abord pressée sur la structure polarisante 2, puis contre la lentille 1 sur un côté de la couche 3 opposé à la structure polarisante 2, au travers de cette dernière. Ce procédé est également applicable lorsque le matériau adhésif sensible à la pression est une structure adhésive telle que décrite précédemment. La couche 3 peut encore être enserrée initialement entre deux films de conditionnement pelables. Elle est alors transférée sur la structure polarisante 2 d'une façon analogue à celle qui vient d'être décrite dans le cas d'un transfert sur la lentille 1. Un tel transfert est toutefois plus simple à mettre en oeuvre sur la structure polarisante 2, étant donné que ladite structure 2 se présente sous la forme d'un film flexible. Un tel transfert comprend les étapes suivantes :
/a2/ peler l'un des deux films de conditionnement pelable de façon à découvrir une première face de la couche de matériau adhésif 3 ;
/b2/ presser cette première face découverte de la couche 3 sur la structure polarisante 2, à travers l'autre des deux films de conditionnement de la couche 3 ; et
/c2/ peler l'autre des deux films de conditionnement pelable de façon à découvrir une seconde face de la couche 3.

Lors d'une étape /d2/ ultérieure, la seconde face découverte de la couche de matériau sensible à la pression 3 sera pressée sur la surface de la lentille 1, à travers la structure polarisante 2.

Ces deux variantes de procédé de transfert concernent le cas où la structure en couche(s) adhésives comprend la ou les couches de matériaux adhésifs sensibles à la pression sous forme de film (ou pellicule). On comprendra aisément que l'objet de l'invention peut également être réalisé en déposant l'adhésif sensible à la pression sous forme liquide, si celui-ci est conditionné ainsi, et cela soit sur une face de l'élément optique, soit sur une face de la structure polarisante, soit sur une face de l'élément optique et une face de la structure polarisante. Dans ce cas l'adhésif sensible à la pression peut être déposé par des techniques bien connues de l'homme de l'art telles que la centrifugation (spin-coating), le spray (spray-coating), ou par utilisation d'une machine à rideau (curtain-coating) par exemple.

Dans chacune des variantes du procédé d'application de la structure en couche(s) adhésive, un traitement préalable des surfaces mises en contact peut être effectue afin d'améliorer l'adhésion. Un traitement de surface chimique, physique ou physico-chimique peut être appliqué a certaines des surfaces mises en contact. Un traitement par décharge corona, par exemple, peut être effectué sur la surface de la lentille 1 et/ou sur la face de la structure polarisante 2 qui est appliquée sur la structure adhésive 3. Tout autre traitement de surface permettant par exemple d'augmenter l'énergie de surface et/ou la polarité des surfaces traitées peut être utilisé, tel que notamment décharge corona, plasma, traitement acide ou basique, irradiation UV.

Dans chacune des deux variantes du procédé, la structure polarisante 2 peut être préformée avant d'être pressée contre la surface de la lentille 1. Eventuellement, la structure polarisante 2 est préformée avec un rayon de courbure moyen qui est plus grand qu'un rayon de courbure moyen de la surface de la lentille 1. Un tel préformage amène la structure polarisante 2 à une forme intermédiaire entre sa forme initiale plane et sa forme finale imposée par la surface convexe de la lentille 1. L'application de la structure 2 contre la lentille 1 sera alors plus facile, et ne générera aucun pli, étirement ni déchirure dans la structure.

Le préformage de la structure polarisante 2 peut être réalisé de différentes façons. En particulier, il peut comprendre un thermoformage lors duquel la structure polarisante 2 est déformée après avoir été chauffée. Il est précisé que la température du thermoformage est limitée de façon à ne pas dégrader le film polariseur 2a qui est compris dans ladite structure 2. A titre d'exemple pour un film polariseur de PET ou un film polariseur à base de PVA laminé entre deux films protecteurs de TAC, la température de préformage peut être comprise entre 80°C et 190°C environ, et être imposée pendant une durée comprise entre quelques secondes et 1 minute. Un dispositif de thermoformage tel que décrit dans la demande de brevet américain publiée sous le numéro US 2005/0121835 peut notamment être utilisé. Il est possible d'utiliser tout autre procédé de thermoformage connu de l'homme de l'art permettant de conserver l'intégrité fonctionnelle du film. Dans le cas où la structure adhésive 3 est d'abord pressée sur la structure polarisante 2, la structure polarisante 2 est préformée avec la structure adhésive 3 avant que la structure adhésive 3 soit pressée contre la lentille 1 à travers la structure polarisante 2. Dans le cas où la structure adhésive 3 est d'abord pressée sur la lentille 1, la structure polarisante 2 peut être préformée contre un moule possédant un profil proche de la face convexe de la lentille 1, avant que la structure adhésive 3 soit transférée sur la lentille 1.

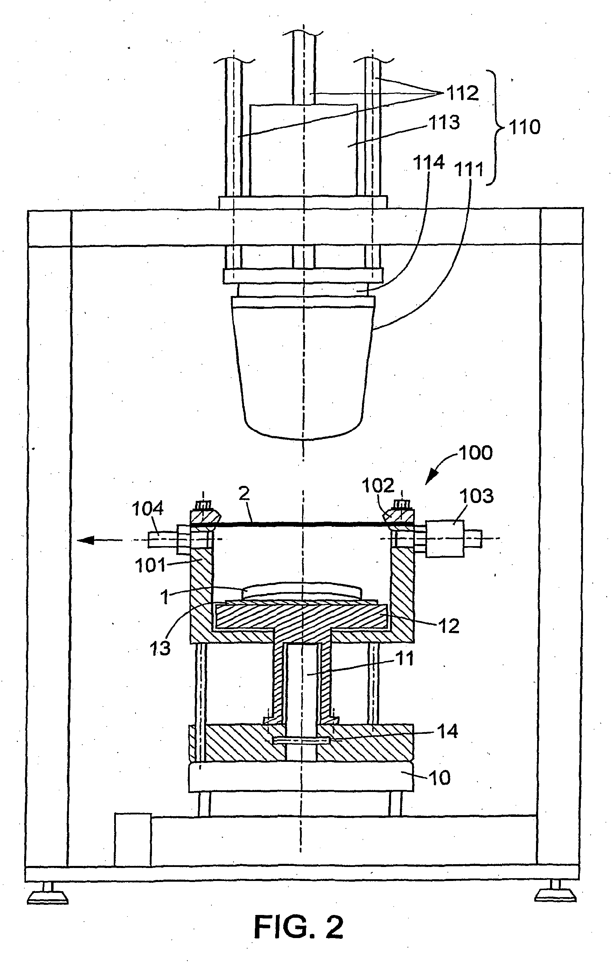

La structure polarisante 2 est ensuite pressée contre la surface convexe de la lentille 1, lors d'une étape /d1 ou /d2/ selon si la structure adhésive 3 est déjà portée par la lentille 1 ou par la structure polarisante 2. Cette étape /d1/ ou /d2/ peut être exécutée, par exemple, en utilisant un dispositif tel que décrit dans la demande de brevet français FR05 03306 et illustré sur la figure 2. Un tel dispositif comprend une enceinte à basse pression 100 et un système d'application 110 qui est supporté au dessus de l'enceinte 100 par l'intermédiaire d'une structure rigide.

L'enceinte à basse pression 100 comprend elle-même une paroi latérale 101, par exemple cylindrique d'axe vertical. Elle est munie d'un anneau de serrage 102, pour maintenir fixement une membrane sur le bord périphérique supérieur de la paroi 101. L'enceinte 100 est ainsi fermée de manière étanche sur sa face supérieure. L'enceinte 100 est disposée au dessus d'une embase 10, à une hauteur fixe. Un cylindre 11 d'axe vertical et un piston 12 qui traverse la face inférieure de l'enceinte 100 permettent de déplacer verticalement un porte-élément 13 à l'intérieur de l'enceinte 100. Un système de blocage 14 permet de fixer la hauteur du porte-élément 13, et la paroi 101 est munie d'un orifice d'admission gazeuse 103, ainsi que d'un orifice d'aspiration 104. L'orifice 104 est connecté à une unité de pompage non représentée.

Le système d'application 110 comprend un tampon 111 monté sur des glissières verticales 112, et déplaçable au moyen d'un système de déplacement 113. Un tel système de déplacement peut comprendre un moteur pas-à-pas qui entraîne une vis de translation, par exemple. Un détecteur de pression 114, qui peut comprendre un élément piézoélectrique, permet de mesurer une force d'application du tampon 111 contre la membrane de fermeture de l'enceinte 100.

La structure polarisante 2 est fixée sur l'enceinte 100 au moyen de l'anneau 102. Elle est orientée de sorte que la structure adhésive 3 est tournée vers l'intérieur de l'enceinte 100, si ladite structure 3 a été préalablement transférée sur la structure polarisante 2.

La lentille 1 est fixée sur le porte-élément 13, de sorte que sa surface convexe est orientée vers le haut. Cette surface porte la structure en couche(s) comprenant au moins une couche de matériau adhésif sensible à la pression 3 si cette dernière a été préalablement transférée sur la lentille 1.

L'application de la structure polarisante 2 contre la lentille 1 peut alors être effectuée en rapprochant l'une de l'autre la structure 2 et la lentille 1 en plusieurs étapes.

Le tampon 111 est descendu de façon à repousser une partie centrale de la structure polarisante 2 vers l'intérieur de l'enceinte 100. Etant donné que la structure 2 est maintenue fermement sur sa périphérie par l'anneau 102, la structure 2 est déformée et prend une forme courbe, qui correspond à celle de l'extrémité inférieure du tampon 111.La courbure qui est imposée de la sorte à la structure 2 permet de garantir un contact ponctuel avec la lentille 1 lorsque, lors d'une seconde étape, la lentille 1 est approchée de la structure polarisante 2. Ce rapprochement de la lentille 1 avec la structure polarisante 2 est obtenu pas la création d'une dépression à l'intérieur de l'enceinte 100. Le piston 12 peut ainsi monter au fur et à mesure qu'un gaz initialement présent dans l'enceinte 100 est aspiré par l'orifice 104. Lorsqu'un contact ponctuel est réalisé entre la structure en couche(s) polarisante 2 et la surface convexe de la lentille 1, à travers la structure adhésive 3, La hauteur du piston 12 est alors fixée au moyen du système de blocage 14.

Enfin, lors d'une troisième étape, le tampon 111 est de nouveau descendu en le pressant sur la structure polarisante 2, d'un côté de celle-ci opposé à la lentille 1. La force d'application exercée est contrôlée au moyen du détecteur 114. Elle peut être choisie de sorte que la pression exercée sur la structure 2 soit de quelques kilogrammes par centimètre-carré, par exemple. De cette façon, la structure 2 est appliquée sur toute la face convexe de la lentille 1, avec la structure adhésive 3 serrée entre celles-ci. L'extrémité du tampon 111 est de préférence constituée d'un matériau souple, de façon à obtenir une application régulière de la structure 2 sur toute la face de la lentille 1.

Le tampon 111 est alors remonté, l'aspiration au sein de l'enceinte 100 est arrêtée et l'anneau 102 est débloqué. La lentille 1 est retirée du dispositif avec la structure 2 collée au travers de la structure 3, sur sa face convexe, en épousant parfaitement la géométrie de l'élément optique de base, y compris dans le cas d'une lentille ophtalmique progressive. La lentille 1 ainsi pourvue du film polariseur 2a possède une fonction polarisante et une qualité optique satisfaisante, compatible avec une utilisation ophtalmique de la lentille. Les inventeurs ont constaté que l'application de la structure 2 sur la lentille 1 ne perturbe pas l'orientation des colorants dichroïques à l'intérieur du film 2a. A l'issue du collage, la lentille 1 possède donc une efficacité de polarisation élevée, sensiblement égale à celle du film polariseur 2a dans son état initial.

En outre, l'utilisation d'une dépression à l'intérieur de l'enceinte 100 pendant l'application de la structure 2 sur la lentille 1 contribue à éviter qu'une bulle gazeuse soit emprisonnée involontairement, entre la structure 2 et la lentille 1, au travers de la structure 3.

Il est à noter qu'une étape préliminaire de chauffage de la structure polarisante 2 peut être effectuée avant la descente du tampon 111 et le rapprochement de la structure 2 de la lentille 1, de façon à permettre le thermoformage de la structure polarisante 2 si nécessaire.

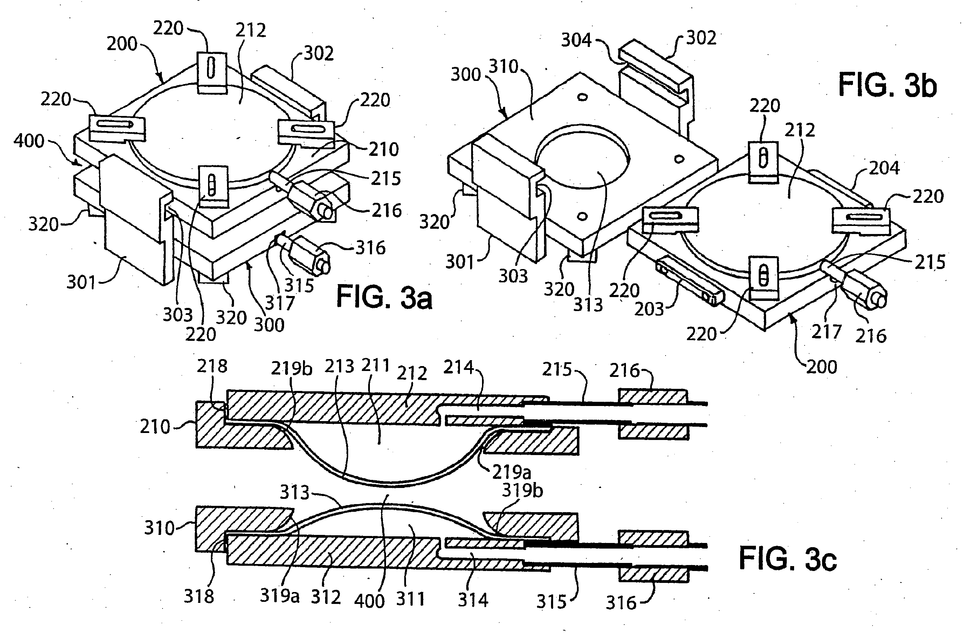

Les figures 3a-3c illustrent un autre dispositif qui peut être utilisé pour appliquer la structure polarisante 2 contre la lentille 1. Conformément à la figure 3a, un système de pressage à deux membranes gonflables comprend un premier et un second dispositifs, référencés respectivement 200 et 300. La figure 3b représente ces deux dispositifs dans une configuration décalée.

Les deux dispositifs 200 et 300 peuvent être assemblés l'un à l'autre avec un écart déterminé 400 (figure 2c) entre ceux-ci, au moyen de deux brides latérales 301 et 302. Les brides 301 et 302 peuvent être solidaires du dispositif 300 et munies de rainures 303 et 304. Le dispositif 200 est alors muni de rails latéraux 203 et 204, pour permettre d'assembler simplement les dispositifs 200 et 300 par déplacement des rails 203 et 204 dans les rainures 303 et 304, en formant des glissières.

Dans le mode de mise en oeuvre de l'invention décrit maintenant, chaque dispositif 200 (resp. 300) comprend un corps principal 210 (resp. 310) muni d'une ouverture 211 (resp. 311). L'ouverture est un peu plus grande que la taille de la lentille 1. Une partie d'obturation 212 (resp. 312) peut être assemblée avec le corps principal 210 (resp. 310), en pinçant une membrane élastique 213 (resp. 313) entre la partie 212 (resp. 312) et le corps 210 (resp. 310), autour de l'ouverture de ce dernier. En outre, chaque partie d'obturation 212, 312 est pourvue de moyens d'admission gazeuse, pour introduire un gaz sous pression entre cette partie d'obturation et la membrane correspondante. Ces moyens d'admission comprennent une partie de canalisation interne 214 (resp. 314) usinée dans la partie d'obturation 212 (resp. 312), une partie de canalisation externe 215 (resp. 315) et un système 216 (resp. 316) de connexion à une source de gaz pressurisé non représentée. Un évidement 217 (resp. 317) est réalisé dans le corps principal 210 (resp. 310) pour laisser passer la partie de canalisation externe 215 (resp. 315). Chaque corps principal 210 (resp. 310) comporte un alésage droit 218 (resp. 318) autour de l'ouverture 211 (resp. 311), qui est adapté pour maintenir la partie d'obturation 212 (resp. 312) dans une position centrée par rapport à l'ouverture. Il comporte aussi une partie de surface conique 219a (resp. 319a) pour guider une déformation de la membrane 213 (resp. 313) par l'ouverture. Une surface de raccordement courbe 219b (resp. 319b) relie l'alésage 218 (resp. 318) à la partie de surface conique 219a (resp. 319a). Enfin, pour chaque dispositif 200 (resp. 300), la partie d'obturation 212 (resp. 312) est maintenue serrée contre le corps principal 210 (resp. 310), en pinçant de façon étanche la membrane 213 (resp. 313), par des étriers vissés 220 (resp. 320).

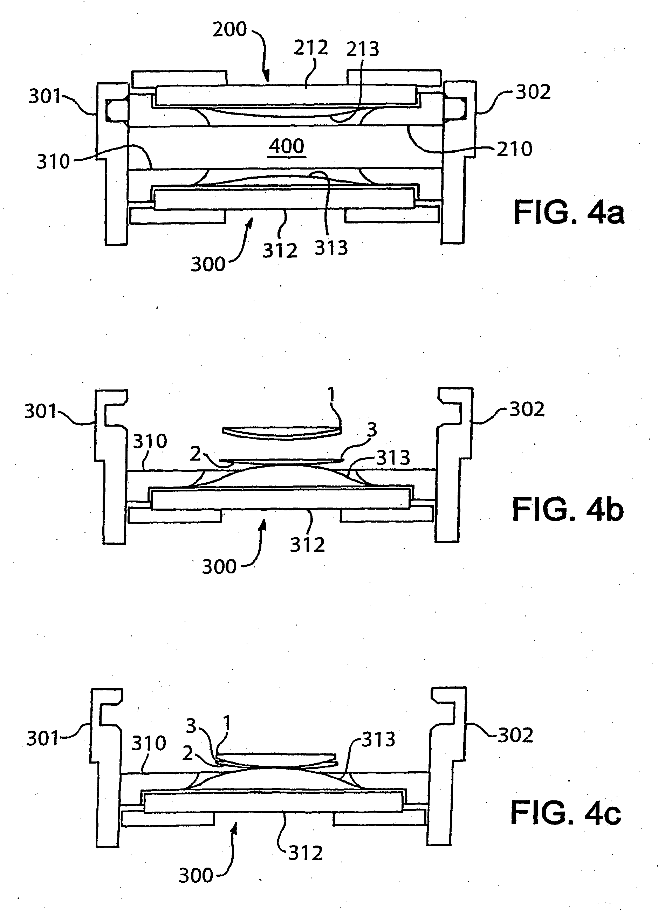

Les figures 3c et 4a montrent les deux dispositifs 200 et 300 en position d'assemblage, lorsque les membranes 213 et 313 sont chacune partiellement gonflées par une pression gazeuse.

Pour l'utilisation de cette deuxième variante du procédé il est nécessaire de préformer la structure polarisante 2 de manière a lui conférer une forme, de préférence sphérique, dont le rayon de courbure est proche du rayon de courbure principal de la lentille 1. Cette étape de préformage peut mettre en oeuvre un procédé et un dispositif de thermoformage, tel que décrit dans la demande de brevet US 2005/0121835, celui-ci étant bien adapté pour le cas d'une structure en couches à base de PVA et de films de protection à base de triacétate de cellulose.

Préalablement à l'étape de thermoformage, la structure polarisante 2 est chauffée afin de l'assouplir. Cette étape peut être réalisée par exemple au moyen de céramique infrarouge dont la température de consigne est comprise entre 80°C et 200°C, préférentiellement entre 130°C et 195°C, de façon a ce que la température de la structure polarisante2 soit proche de la température de transition vitreuse d'un constituant principal des couche(s) de la structure. Ce chauffage est maintenu pendant une durée comprise entre 5 secondes et 30 minutes, de préférence entre 20 secondes et 1 minutie.

L'étape de thermoformage pour une structure polarisante 2 telle que décrite précédemment est notamment réalisée par application d'une pression contrôlée sur ladite structure maintenue dans la station de thermoformage et l'application d'un flux de gaz chaud réparti uniformément sur l'ensemble du dispositif. Le flux de gaz chauffé à une température comprise entre 20°C et 165°C, préférentiellement comprise entre 90°C et 13 0°C, permet d'appliquer une pression comprise entre 20 et 290 psi, préférentiellement comprise entre 60 et 120 psi, sur la structure polarisante 2, pendant une durée comprise entre 5 secondes et 15 minutes, de préférence comprise entre 20 et 60 secondes, De telles conditions opératoires permettent d'obtenir que la structure polarisante 2 se déforme et épouse la forme de l'insert présent dans la partie inférieure du dispositif. La structure polarisante 2 ainsi préformée peut être découpée de façon à la séparer de sa périphérie restée plane.

L'étape de pressage de la structure polarisante 2 ainsi préformée contre la lentille 1, en comprimant la structure adhésive 3, est maintenant décrite en référence aux figures 4b-4f.

Le dispositif 200 est retiré dans un premier temps, et la structure en couche(s) 2 est disposée sur la membrane 313 du dispositif 300. Si la structure polarisante 2 porte la structure adhésive 3, ladite structure 2 est orientée de sorte que ladite structure 3 soit tournée vers le haut (variante du procédé correspondant aux figures 4b-4f).

La lentille 1 est disposée à son tour sur la structure polarisante 2, avec sa face convexe tournée vers le bas. Si la lentille 1 porte la structure adhésive 3 sur sa face convexe, ladite structure 3 est alors tournée vers le bas, face à la structure 2 (figures 4b et 4c). Lorsque la structure 2 a été préalablement préformée, la structure 2 et la lentille 1 peuvent présenter des surfaces en contact sensiblement complémentaires.

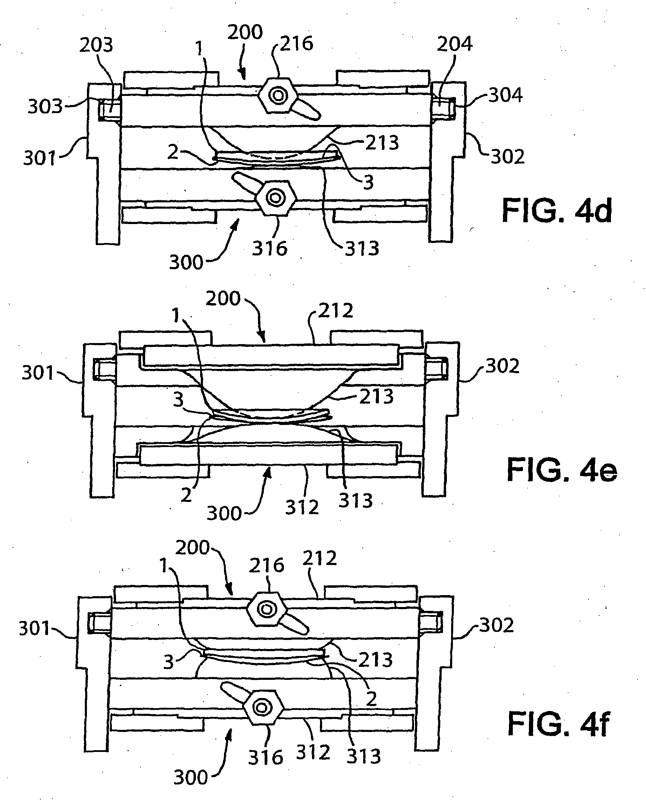

Le dispositif 200 est alors assemblé avec le dispositif 300, en engageant les rails 203 et 204 dans les rainures 303 et 304 des brides 301 et 302. Les deux membranes 213 et 313 sont amenées de cette façon en vis-à-vis, de part et d'autre de la lentille 1 et de la structure 2. Ensuite, un gaz est introduit sous pression dans la cavité située entre la partie d'obturation 212 et la membrane 213 du dispositif 200, jusqu'à ce que la membrane 213 vienne toucher en gonflant la face postérieure de la lentille 1. La figure 4d illustre une telle configuration, et la figure 4e est une vue en section qui correspond à la figure 4d et fait apparaître clairement la membrane 213 gonflée.

Enfin, la pression gazeuse entre la partie 312 et la membrane 313 dans le dispositif 300 est amenée à une valeur égale à celle de la pression entre la partie 212 et la membrane 213 dans le dispositif 200, cette dernière pression étant maintenue sensiblement constante. Un tel mode opératoire permet d'éviter que des déplacements de la lentille 1 et de la structure polarisante 2 ne se produisent. La membrane 313 est ainsi gonflée contre la structure polarisante 2 et la membrane 213 sert de surface d'appui de la lentille 1. La pression dans la membrane 313 est augmentée jusqu'à ce que celle-ci soit déformée de façon à être appliquée sur l'ensemble de la surface de la structure polarisante 2 (figure 4f). De cette façon, la pression de la membrane 313 est transmise à la couche de matériau adhésif 3 en chaque point de la surface de la lentille 1. Une application régulière de la structure 2 sur la lentille 1 est ainsi obtenue.

La pression gazeuse à l'intérieur des dispositifs 200 et 300 est ensuite diminuée, et la lentille 1 est récupérée. La structure polarisante 2 est alors collée sur la face convexe de la lentille 1, par l'intermédiaire de la structure adhésive 3. Les inventeurs ont constaté qu'un tel procédé n'engendre aucune réduction du contraste de polarisation du film 2a, par rapport à la valeur initiale de ce même contraste mesurée avant que la structure 2 soit assemblée avec la lentille 1. La lentille polarisante obtenue présente en outre une bonne qualité optique.

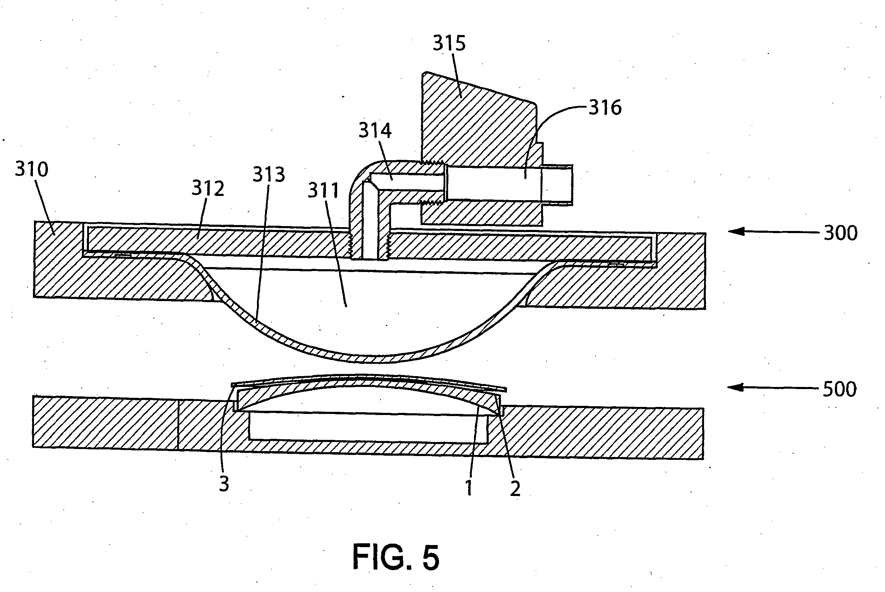

Optionnellement, dans une autre variante du procédé représenté à la figure 5, une seule membrane peut être utilisée. Dans ce cas le dispositif 300 comportant la membrane 313 est présent et le dispositif 200 avec la membrane 213 est remplacé par une plaque rigide 500 s'engageant dans les rainures 303 et 304 de la figure 3b et non représentées sur la figure 5. La lentille 1 est maintenue du côté concave par la plaque rigide 500 remplaçant le dispositif 200 ou par tout autre élément présentant des propriétés de rigidité et de forme lui permettant de remplir la fonction de support à la lentille 1. La séquence du procédé permettant d'appliquer la structure polarisante 2 sur la lentille 1 par l'intermédiaire de la structure adhésive 3 peut alors être réduite à la mise sous pression de la membrane 313 solidaire du dispositif 300.

Il est entendu que de nombreuses modifications peuvent être introduites dans les réalisations de l'invention qui ont été décrites en détail. En particulier, les modifications suivantes sont possibles, tout en conservant certains au moins des avantages de l'invention :
- le film polariseur peut être humidifié de façon contrôlée avant que la structure en couche(s) soit pressée contre l'élément optique de base, notamment dans le cas où la structure en couche(s) est constituée par un film polariseur seul à base de PVA, c'est-à-dire sans film de protection. Une telle humidification permet au film polariseur de se conformer plus facilement à la courbure de la surface de l'élément optique de base ;
- la structure adhésive 3 peut comprendre deux couche(s) adhésives de qualité optique de type « sensible à la pression » de nature identique ou différente séparées par un film intercalaire, par exemple un film de PET d'épaisseur 10µm. Après assemblage de la structure adhésive complexe 3 sur la lentille 1, l'une des couche(s) de matériau adhésif est disposée entre l'élément optique de base et le film intercalaire, et l'autre couche de matériau adhésif est disposée entre le film intercalaire et la structure polarisante. Une telle configuration à deux matériaux adhésifs sensibles à la pression distincts permet d'optimiser le choix de ces matériaux adhésifs indépendamment l'un de l'autre pour obtenir une excellente adhésion sur la structure polarisante d'une part, sur l'élément optique de base d'autre part, et des deux côtés du film intercalaire par ailleurs ;

- l'élément optique polarisant obtenu peut être chauffé après que la structure polarisante a été pressée contre l'élément optique de base, de façon à réduire des contraintes présentes dans la structure en couche(s). Un tel chauffage peut être réalisé dans une étuve à 80°C pendant 1 heure, par exemple ; et
- lorsque la structure polarisante qui est collée sur l'élément optique de base est constituée par le film polariseur seul, un revêtement fonctionnel peut être appliqué ultérieurement sur le film polariseur, afin d'assurer une protection de celui-ci. Un tel revêtement peut notamment être un revêtement anti-choc ou anti-abrasion tel que ceux couramment utilisés dans le domaine de l'optique, et de l'ophtalmie en particulier.

### Exemples:

### Exemple 1 : Réalisation d'une lentille ophtalmique polarisante d'indice 1.665 et de base 6.75

On définit la base d'une lentille ou d'un film courbé comme étant la puissance dioptrique d'une lentille plan-convexe ayant un indice de réfraction égal à 1,53 et présentant la même courbure.

La structure en couches 2 polarisante est un film polariseur SHC-128UP, de type triacétate de cellulose / PVA / triacétate de cellulose, produit par la société Polatechno et faisant une épaisseur totale de 213 micromètres.

Ce film initialement plan est thermoformé puis découpé selon un cercle de telle sorte qu'il forme une part de sphère ayant une courbure correspondant à une base de 6,00 Dioptries. La face convexe du film ainsi préformé est traitée par une décharge corona.

Une lentille ophtalmique à base de polythiouréthane, d'indice de réfraction 1,665, et de base 6,75 Dioptries est soumise à une décharge corona sur sa face convexe.

La lentille est alors placée dans le module a dépression d'un dispositif bien connu de l'homme de l'art habituellement utilisé pour l'application de film de protection précédent les étapes de blocage et surfaçage des lentilles semi-finies.

Une structure en couche 3 d'adhésif sensible à la pression CS9621 vendu par la société Nitto Denko est composée d'une couche d'adhésif à base de polyacrylate de 25 micromètres d'épaisseur et de deux films de protection en polyéthylène téréphtalate (PET), présents de part et d'autre du film adhésif. Un des deux films de PET est retiré, puis la structure en couche adhésive est appliquée sur le module a dépression de telle manière que la couche de PSA est en regard de la face convexe de la lentille. La structure en couches PSA/PET est ensuite chauffée à l'aide d'un flux d'air chaud, de telle sorte que le film de PET supportant la couche de PSA soit très notablement assouplie. Le module à dépression est alors mis en action et le film PSA/PET fortement déformé, rencontre la face convexe de la lentille qui monte dans le module. Le film PSA/PET est ainsi appliqué sur toute la face convexe de la lentille.

La lentille ainsi recouverte de la structure en couches PSA/PET peut être stockée puis transportée ou bien immédiatement transportée vers le dispositif à membrane unique 500 tel que représenté sur la figure 5.

Le film de PET protégeant le PSA est retiré et la lentille est placée dans le dispositif 500. La structure en couches 2, polarisante et préformée, est alors placée au dessus de la lentille, de telle sorte la face concave de ladite structure 2 soit en regard de la face convexe de la lentille 1 et de telle sorte que les centres géométriques de chacune des faces en regard se superposent.

La membrane 313 du dispositif 500 est alors mise sous pression à l'aide d'air comprimé (via les parties 314, 315, et 316 du dispositif). La membrane 313 est ainsi déformée et vient progressivement plaquer la structure en couches polarisante 3 sur le film de PSA présent à la surface de la lentille. Une pression de 35 psi est maintenue dans la membrane 313 pendant 10 secondes. La membrane est enfin dégonflée et une lentille polarisante est ainsi obtenue.

La lentille ainsi obtenue subit ensuite les étapes classiques de surfaçage, s'il s'agit d'une lentille semi-finie, puis de détourage.

### Exemple 2 : Réalisation d'une lentille ophtalmique polarisante d'indice 1.67 et de base 4.0

La structure en couches 2 polarisante est un film polariseur de type triacétate de cellulose / PVA / triacétate de cellulose produit par la société Nitto Denko, sous la référence TEG1465DU, comportant une couche de PSA polyacrylate de 20 micromètres d'épaisseur environ. La structure en couches polarisante 2 ayant une épaisseur d'environ 110 micromètres, l'épaisseur totale du film commercial est de 130 micromètres environ. Deux pellicules protectrices additionnelles souples et amovibles sont disposées respectivement de part et d'autre du film polarisant.

Ce film est initialement plan. Après pelage de la pellicule protectrice amovible située du côté de la couche de PSA 3, le film est fixé sur un dispositif similaire à celui représenté sur la figure 2, comportant une enceinte à basse pression 100 et un système d'application 110. Plus précisément, le film est fixé sur une enceinte 100 au moyen d'un anneau 102 de telle manière que la couche de PSA 3 est en regard de la face convexe de la lentille 1 préalablement disposée à l'intérieur de l'enceinte 100. La lentille 1 est constituée d'un polymère thermodurcissable d'indice proche de 1.67 pour les longueurs d'onde du spectre visible, possède un diamètre de 65 mm et présente une face convexe sphérique dont le rayon de courbure est 133 mm, ce qui correspond approximativement à une surface de base 4.0

Le film polariseur est chauffé à l'aide d'un pistolet à air chaud jusqu'à une température moyenne de 90 degrés Celsius. Un tampon en silicone 111 présentant une dureté de 54 Shore 00 est descendu sur le film jusqu'à ce qu'il exerce sur celui-ci une force mécanique de 10 Newtons environ. La face du tampon en contact avec le film présente un rayon de courbure au centre de 43 mm environ. Puis la lentille est amenée au contact de la couche adhésive 3 portée par le film par la mise en dépression de l'enceinte 100, la dépression étant mesurée à 500 mbar. Le mouvement de la lentille amène la structure en couches polarisante 2 à épouser progressivement le profil de la face convexe de la lentille. Dans le même temps, la couche de PSA est ainsi progressivement mise en contact avec la face convexe de la lentille. Immédiatement après la mise en dépression de l'enceinte 100, le tampon 111 descend à nouveau pour exercer sur le film à présent au contact de la lentille 1 une force mécanique de 450 Newtons environ, permettant de terminer la conformation du film sur la lentille et d'obtenir l'adhérence de la couche adhésive de PSA 3. La force est maintenue durant 5 secondes. Il ne reste alors qu'à peler la pellicule protectrice encore présente à la surface du film polariseur.

La lentille ainsi obtenue subit ensuite les étapes classiques de surfaçage, s'il s'agit d'une lentille semi-finie, puis de détourage.

## Revendications

1. Procédé de fabrication d'un élément optique polarisant comprenant :
- une lentille ophtalmique (1) ;
- une structure en couche(s) (2) qui incorpore au moins un film polariseur (2a), ledit film polariseur contenant contenant au moins un colorant dichroïque et étant orienté ; et
- une structure en couche(s) (3) qui comprend au moins une couche de matériau adhésif sensible à la pression de qualité optique, et qui est disposée entre une surface de la lentille ophtalmique (1) et la structure en couche(s) (2) qui incorpore le film polariseur, de façon à retenir de façon permanente ladite structure qui incorpore le film polariseur sur la surface de la lentille ophtalmique,
procédé suivant lequel la structure en couche(s) (3) qui comprend la couche de matériau adhésif sensible à la pression est initialement intercalée entre deux films de conditionnement pelables, et le procédé comprend les étapes suivantes :
/à1/peler l'un des deux films de conditionnement pelable de façon à découvrir une face de la couche de matériau adhésif sensible à la pression ;
/b1/ presser d'abord la face découverte de la couche de matériau adhésif sensible à la pression sur la surface de la lentille ophtalmique (1), à travers l'autre des deux films de conditionnement pelable de ladite couche de matériau adhésif sensible à la pression ;
/c1/ peler l'autre des deux films de conditionnement de façon à découvrir l'autre face de la couche de matériau adhésif sensible à la pression ; puis
/d1/ presser la structure en couche(s) (2) qui incorpore le film polariseur sur ladite autre face découverte de la couche de matériau adhésif sensible à la pression, d'un côté de ladite structure qui comprend la couche de matériau adhésif sensible à la pression opposé à la lentille ophtalmique.

2. Procédé de fabrication d'un élément optique polarisant comprenant :
- une lentille ophtalmique (1) ;
- une structure en couche(s) (2) qui incorpore au moins un film polariseur (2a), ledit film polariseur contenant au moins un colorant dichroïque et étant orienté ; et
- une structure en couche(s) (3) qui comprend au moins une couche de matériau adhésif sensible à la pression de qualité optique, et qui est disposée entre une surface de la lentille ophtalmique (1) et la structure en couche(s) (2) qui incorpore le film polariseur, de façon à retenir de façon permanente ladite structure qui incorpore le film polariseur sur la surface de la lentille ophtalmique,
procédé suivant lequel la structure en couche(s) (3) qui comprend la couche de matériau adhésif sensible à la pression est initialement intercalée entre deux films de conditionnement pelables, et le procédé comprend les étapes suivantes :
/a2/ peler l'un des deux films de conditionnement pelable de façon à découvrir une face de la couche de matériau adhésif sensible à la pression;
/b2/ presser d'abord la face découverte de la couche de matériau adhésif sensible à la pression sur la structure en couche(s) (2) qui incorpore le film polariseur, à travers l'autre des deux films de conditionnement pelable de ladite couche de matériau adhésif ;
/c2/ peler l'autre des deux films de conditionnement de façon à découvrir l'autre face de la couche de matériau adhésif sensible à la pression; puis
/d2/ presser ladite autre face découverte de la couche de matériau sensible à la pression sur la surface de la lentille ophtalmique (1), à travers ladite structure en couche(s) (2) qui incorpore le film polariseur.

3. Procédé selon la revendication 1 ou 2, dans lequel le film polariseur (2a) est à base de polyvinyl alcool ou de polyéthylène téréphtalate.

4. Procédé selon l'une quelconque des revendications précédentes, dans lequel la structure en couche(s) (2) qui incorpore le film polariseur comprend en outre au moins un film de protection (2b) du film polariseur (2a).

5. Procédé selon la revendication 4, dans lequel le film de protection (2b) est à base de triacétate de cellulose, d'acétate-butyrate de cellulose, de polyéthylène téréphtalate, de polycarbonate ou de polyamide.

6. Procédé selon la revendication 4 ou 5, dans lequel le film de protection (2b) est disposé d'un côté du film polariseur (2a) opposé à la lentille ophtalmique (1) dans l'élément optique polarisant qui est fabriqué.

7. Procédé selon la revendication 6, dans lequel la structure en couche(s) (2) qui incorpore le film polariseur comprend en outre au moins un revêtement fonctionnel disposé sur le film de protection (2b), d'un côté dudit film de protection opposé au film polariseur (2a).

8. Procédé selon la revendication 1 ou 2, comprenant en outre au moins un revêtement fonctionnel disposé directement sur le film polariseur (2a).

9. Procédé selon l'une quelconque des revendications 4 à 7, dans lequel la structure en couche(s) (2) qui incorpore le film polariseur comprend deux films de protection (2b, 2c) disposés de chaque côté du film polariseur (2a).

10. Procédé selon la revendication 9, dans lequel les deux films de protection (2b, 2c) sont identiques.

11. Procédé selon la revendication 9 dans lequel les deux films de protection (2b, 2c) sont différents.

12. Procédé selon l'une quelconque des revendications précédentes, dans lequel le matériau adhésif sensible à la pression est choisi parmi un composé à base de polyacrylate et un copolymère à blocs à base de styrène.

13. Procédé selon la revendication 12, dans lequel le matériau adhésif sensible à la pression est un polyacrylate.

14. Procédé selon l'une quelconque des revendications précédentes, dans lequel la structure en couche(s) (3) qui comprend la couche de matériau adhésif sensible à la pression possède une épaisseur comprise entre 0,5 et 300 micromètres.

15. Procédé selon la revendication 14, dans lequel la structure en couche(s) (3) qui comprend la couche de matériau adhésif sensible à la pression possède une épaisseur comprise entre 2 et 100 micromètres.

16. Procédé selon l'une quelconque des revendications précédentes, dans lequel la structure en couche(s) (3) qui comprend ladite au moins une couche de matériau adhésif sensible à la pression comprend deux couches adhésives de qualité optique constituées respectivement d'un premier et d'un second matériau adhésif sensible à la pression, et un film intercalaire, une première desdites deux couches de matériau adhésif étant disposée entre la lentille ophtalmique (1) et le film intercalaire, et une seconde desdites deux couches de matériau adhésif étant disposée entre ledit film intercalaire et la structure en couche (2), dans l'élément optique polarisant qui est fabriqué.

17. Procédé selon la revendication 16, dans lequel le premier matériau adhésif sensible à la pression et le deuxième matériau sensible à la pression sont différents.

18. Procédé selon la revendication 16 dans lequel le premier matériau adhésif sensible à la pression et le deuxième matériau sensible à la pression sont identiques.

19. Procédé selon l'une quelconque des revendications précédentes, dans lequel la structure en couche(s) (2) qui incorpore le film polariseur est située sur une face antérieure de la lentille ophtalmique (1), dans l'élément optique polarisant qui est.

20. Procédé selon la revendication 1, comprenant en outre, entre les étapes /a1/ et /b1/, un chauffage dudit autre film de conditionnement pelable portant la couche de matériau adhésif sensible à la pression, de façon à assouplir ledit autre film de conditionnement.

21. Procédé selon la revendication 1, dans lequel la structure en couche(s) (3) qui comprend la couche de matériau sensible à la pression est déposée sous forme liquide par un procédé de centrifugation, de spray, ou par utilisation d'une machine à rideau, soit sur une face de la lentille ophtalmique (1), soit sur une face de la structure en couche(s) (2) qui incorpore le film polariseur, soit sur une face de la lentille ophtalmique (1) et sur une face de la structure en couche(s) (2) qui incorpore le film polariseur.

22. Procédé selon l'une quelconque des revendications précédentes, suivant lequel la structure en couche(s) (2) qui incorpore le film polariseur est préformée avant d'être pressée contre la surface de la lentille ophtalmique (1).

23. Procédé selon la revendication 22, suivant lequel la structure en couche(s) (2) qui incorpore le film polariseur est préformée avec un rayon de courbure moyen plus grand qu'un rayon de courbure moyen de la surface de la lentille ophtalmique (1).

24. Procédé selon la revendication 22 ou 23, suivant lequel le préformage de la structure en couche(s) (2) qui incorpore le film polariseur comprend un thermoformage.

25. Procédé selon l'une des revendications 22 à 24 ensemble la revendication 2, suivant lequel la structure en couche(s) (2) qui incorpore le film polariseur est préformée avec la structure en couche(s) (3) qui comprend la couche de matériau sensible à la pression, après que ladite couche de matériau adhésif a été pressée sur ladite structure en couche(s) (2) qui incorpore le film polariseur, et avant que la couche de matériau adhésif (3) soit pressée contre la lentille ophtalmique (1) à travers la structure en couche(s) (2) qui incorpore le film polariseur.

26. Procédé selon l'une quelconque des revendications précédentes, suivant lequel le film polariseur (2a) est humidifié avant que la structure en couche(s) (2) qui incorpore le film polariseur soit pressée contre la lentille ophtalmique (1).

27. Procédé selon l'une quelconque des revendications précédentes, suivant lequel l'élément optique polarisant est chauffé après que la structure en couche(s) (2) qui incorpore le film polariseur a été pressée contre la lentille ophtalmique (1), de façon à réduire des contraintes présentes dans la structure en couche(s) qui incorpore le film polariseur.

## Patentansprüche

1. Verfahren zur Herstellung eines optischen Polarisationselements, umfassend:
- eine ophthalmische Linse (1);
- eine Schichtstruktur (2), die wenigstens einen Polarisationsfilm (2a) beinhaltet, wobei dieser Polarisationsfilm wenigstens einen dichroitischen Farbstoff enthält enthält und ausgerichtet ist; und
- eine Schichtstruktur (3), die wenigstens eine Schicht aus einem druckempfindlichen Klebstoff von optischer Qualität umfasst und die zwischen einer Fläche der ophthalmischen Linse (1) und der Schichtstruktur (2), die den Polarisationsfilm beinhaltet, angeordnet ist, um diese Struktur, die den Polarisationsfilm beinhaltet, dauerhaft auf der Fläche der ophthalmischen Linse zu halten,
wobei gemäß diesem Verfahren die Schichtstruktur (3), welche die Schicht aus einem druckempfindlichen Klebstoff umfasst, anfänglich zwischen zwei abziehbaren Verpackungsfolien angeordnet ist, und das Verfahren die folgenden Schritte umfasst:
/a1/ Abziehen einer der zwei abziehbaren Verpackungsfolien, um eine Seite der Schicht aus einem druckempfindlichen Klebstoff freizulegen;
/b1/ Andrücken zunächst der freigelegten Seite der Schicht aus einem druckempfindlichen Klebstoff an die Fläche der ophthalmischen Linse (1) durch die andere der zwei abziehbaren Verpackungsfolien der Schicht aus einem druckempfindlichen Klebstoff hindurch;
/c1/ Abziehen der anderen der zwei Verpackungsfolien, um die andere Seite der Schicht aus einem druckempfindlichen Klebstoff freizulegen; danach
/d1/ Andrücken der Schichtstruktur (2), die den Polarisationsfilm beinhaltet, an die andere freigelegte Seite der Schicht aus einem druckempfindlichen Klebstoff auf einer der ophthalmischen Linse gegenüberliegenden Seite der Struktur, welche die Schicht aus einem druckempfindlichen Klebstoff umfasst.

2. Verfahren zur Herstellung eines optischen Polarisationselements, umfassend:
- eine ophthalmische Linse (1);
- eine Schichtstruktur (2), die wenigstens einen Polarisationsfilm (2a) beinhaltet, wobei dieser Polarisationsfilm wenigstens einen dichroitischen Farbstoff enthält und ausgerichtet ist; und
- eine Schichtstruktur (3), die wenigstens eine Schicht aus einem druckempfindlichen Klebstoff von optischer Qualität umfasst und die zwischen einer Fläche der ophthalmischen Linse (1) und der Schichtstruktur (2), die den Polarisationsfilm beinhaltet, angeordnet ist, um diese Struktur, die den Polarisationsfilm beinhaltet, dauerhaft auf der Fläche der ophthalmischen Linse zu halten,
wobei gemäß diesem Verfahren die Schichtstruktur (3), welche die Schicht aus einem druckempfindlichen Klebstoff umfasst, anfänglich zwischen zwei abziehbaren Verpackungsfolien angeordnet ist, und das Verfahren die folgenden Schritte umfasst:
/a2/ Abziehen einer der zwei abziehbaren Verpackungsfolien, um eine Seite der Schicht aus einem druckempfindlichen Klebstoff freizulegen;
/b2/ Andrücken zunächst der freigelegten Seite der Schicht aus einem druckempfindlichen Klebstoff an die Schichtstruktur (2), die den Polarisationsfilm beinhaltet, durch die andere der zwei abziehbaren Verpackungsfolien der Klebstoffschicht hindurch;
/c2/ Abziehen der anderen der zwei Verpackungsfolien, um die andere Seite der Schicht aus einem druckempfindlichen Klebstoff freizulegen; danach
/d2/ Andrücken der anderen freigelegten Seite der Schicht aus einem druckempfindlichen Klebstoff an die Fläche der ophthalmischen Linse (1) durch die Schichtstruktur (2), die den Polarisationsfilm beinhaltet, hindurch.

3. Verfahren nach Anspruch 1 oder 2, wobei der Polarisationsfilm (2a) auf Polyvinylalkohol oder Polyethylenterephthalat basiert.

4. Verfahren nach einem der vorhergehenden Ansprüche, wobei die Schichtstruktur (2), die den Polarisationsfilm beinhaltet, außerdem wenigstens einen Schutzfilm (2b) des Polarisationsfilms (2a) umfasst.

5. Verfahren nach Anspruch 4, wobei der Schutzfilm (2b) auf Cellulosetriacetat, Celluloseacetatbutyrat, Polyethylenterephthalat, Polycarbonat oder Polyamid basiert.

6. Verfahren nach Anspruch 4 oder 5, wobei in dem optischen Polarisationselement, das hergestellt wird, der Schutzfilm (2b) auf einer der ophthalmischen Linse (1) gegenüberliegenden Seite des Polarisationsfilms (2a) angeordnet ist.

7. Verfahren nach Anspruch 6, wobei die Schichtstruktur (2), die den Polarisationsfilm beinhaltet, außerdem wenigstens eine Funktionsbeschichtung umfasst, die auf dem Schutzfilm (2b) auf einer dem Polarisationsfilm (2a) gegenüberliegenden Seite dieses Schutzfilms angeordnet ist.

8. Verfahren nach Anspruch 1 oder 2, welches außerdem wenigstens eine Funktionsbeschichtung umfasst, die direkt auf dem Polarisationsfilm (2a) angeordnet ist.

9. Verfahren nach einem der Ansprüche 4 bis 7, wobei die Schichtstruktur (2), die den Polarisationsfilm beinhaltet, zwei Schutzfilme (2b, 2c) umfasst, die beiderseits des Polarisationsfilms (2a) angeordnet sind.

10. Verfahren nach Anspruch 9, wobei die zwei Schutzfilme (2b, 2c) identisch sind.

11. Verfahren nach Anspruch 9, wobei die zwei Schutzfilme (2b, 2c) verschieden sind.

12. Verfahren nach einem der vorhergehenden Ansprüche, wobei der druckempfindliche Klebstoff aus einer Verbindung auf Polyacrylatbasis und einem Blockcopolymer auf Styrolbasis ausgewählt ist.

13. Verfahren nach Anspruch 12, wobei der druckempfindliche Klebstoff ein Polyacrylat ist.

14. Verfahren nach einem der vorhergehenden Ansprüche, wobei die Schichtstruktur (3), welche die Schicht aus einem druckempfindlichen Klebstoff umfasst, eine Dicke zwischen 0,5 und 300 Mikrometern besitzt.

15. Verfahren nach Anspruch 14, wobei die Schichtstruktur (3), welche die Schicht aus einem druckempfindlichen Klebstoff umfasst, eine Dicke zwischen 2 und 100 Mikrometern besitzt.

16. Verfahren nach einem der vorhergehenden Ansprüche, wobei die Schichtstruktur (3), welche die wenigstens eine Schicht aus einem druckempfindlichen Klebstoff umfasst, zwei Haftschichten von optischer Qualität, die aus einem ersten bzw. einem zweiten druckempfindlichen Klebstoff bestehen, und einen Zwischenfilm umfasst, wobei in dem optischen Polarisationselement, das hergestellt wird, eine erste der zwei Klebstoffschichten zwischen der ophthalmischen Linse (1) und dem Zwischenfilm angeordnet ist und eine zweite der zwei Klebstoffschichten zwischen dem Zwischenfilm und der Schichtstruktur (2) angeordnet ist.

17. Verfahren nach Anspruch 16, wobei der erste druckempfindliche Klebstoff und das zweite druckempfindliche Material verschieden sind.

18. Verfahren nach Anspruch 16, wobei der erste druckempfindliche Klebstoff und das zweite druckempfindliche Material identisch sind.

19. Verfahren nach einem der vorhergehenden Ansprüche, wobei die Schichtstruktur (2), die den Polarisationsfilm beinhaltet, sich in dem optischen Polarisationselement, das hergestellt wird, auf einer Vorderseite der ophthalmischen Linse (1) befindet.

20. Verfahren nach Anspruch 1, welches außerdem zwischen den Schritten /a1/ und /b1/ eine Erwärmung der anderen abziehbaren Verpackungsfolie, welche die Schicht aus einem druckempfindlichen Klebstoff trägt, umfasst, um diese andere Verpackungsfolie geschmeidig zu machen.

22. Verfahren nach einem der vorhergehenden Ansprüche, gemäß dem die Schichtstruktur (2), die den Polarisationsfilm beinhaltet, vorgeformt wird, bevor sie gegen die Fläche der ophthalmischen Linse (1) gedrückt wird.

23. Verfahren nach Anspruch 22, gemäß dem die Schichtstruktur (2), die den Polarisationsfilm beinhaltet, mit einem mittleren Krümmungsradius vorgeformt wird, der größer als ein mittlerer Krümmungsradius der Fläche der ophthalmischen Linse (1) ist.

24. Verfahren nach Anspruch 22 oder 23, gemäß dem das Vorformen der Schichtstruktur (2), die den Polarisationsfilm beinhaltet, ein Warmformen umfasst.

25. Verfahren nach einem der Ansprüche 22 bis 24 zusammen mit Anspruch 2, gemäß dem die Schichtstruktur (2), die den Polarisationsfilm beinhaltet, mit der Schichtstruktur (3), welche die Schicht aus einem druckempfindlichen Klebstoff umfasst, vorgeformt wird, nachdem die Schicht aus einem druckempfindlichen Klebstoff an die Schichtstruktur (2), die den Polarisationsfilm beinhaltet, angedrückt wurde, und bevor die Klebstoffschicht (3) durch die Schichtstruktur (2), die den Polarisationsfilm beinhaltet, hindurch gegen die ophthalmische Linse (1) gedrückt wird.

26. Verfahren nach einem der vorhergehenden Ansprüche, gemäß dem der Polarisationsfilm (2a) befeuchtet wird, bevor die Schichtstruktur (2), die den Polarisationsfilm beinhaltet, gegen die ophthalmische Linse (1) gedrückt wird.

27. Verfahren nach einem der vorhergehenden Ansprüche, gemäß dem das optische Polarisationselement erwärmt wird, nachdem die Schichtstruktur (2), die den Polarisationsfilm beinhaltet, gegen die ophthalmische Linse (1) gedrückt worden ist, um Spannungen zu verringern, die in der Schichtstruktur, die den Polarisationsfilm beinhaltet, vorhanden sind.

## Claims

1. Process for manufacturing a polarising optical element comprising:
- an ophthalmic lens (1);
- a single- or multi-layer structure (2) that incorporates at least one polarising film (2a), said polarising film containing containing at least one dichroic dye and being oriented; and
- a single- or multi-layer structure (3) that comprises at least one layer of optical-quality pressure-sensitive adhesive material, and that is placed between a surface of the ophthalmic lens (1) and the single- or multi-layer structure (2) that incorporates the polarising film, so as to permanently retain said structure that incorporates the polarising film on the surface of the ophthalmic lens,
process wherein the single- or multi-layer structure (3) that comprises the layer of pressure-sensitive adhesive material is initially inserted between two peelable packaging films, and the process comprises the following steps:
/a1/ peeling off one of the two peelable packaging films so as to uncover one face of the layer of pressure-sensitive adhesive material;
/b1/ pressing first the uncovered face of the layer of pressure-sensitive adhesive material against the surface of the ophthalmic lens (1), through the other of the two peelable packaging films of said layer of pressure-sensitive adhesive material;
/c1/ peeling off the other of the two packaging films so as to uncover the other face of the layer of pressure-sensitive adhesive material; then
/d1/ pressing the single- or multi-layer structure (2) that incorporates the polarising film against said other uncovered face of the layer of pressure-sensitive adhesive material, from a side of said structure that comprises the layer of pressure-sensitive adhesive material which is opposite the ophthalmic lens.

2. Process for manufacturing a polarising optical element comprising:
- an ophthalmic lens (1);
- a single- or multi-layer structure (2) that incorporates at least one polarising film (2a), said polarising film containing at least one dichroic dye and being oriented; and
- a single- or multi-layer structure (3) that comprises at least one layer of optical-quality pressure-sensitive adhesive material, and that is placed between a surface of the ophthalmic lens (1) and the single- or multi-layer structure (2) that incorporates the polarising film, so as to permanently retain said structure that incorporates the polarising film on the surface of the ophthalmic lens,
process wherein the single- or multi-layer structure (3) that comprises the layer of pressure-sensitive adhesive material is initially inserted between two peelable packaging films, and the process comprises the following steps:
/a2/ peeling off one of the two peelable packaging films so as to uncover one face of the layer of pressure-sensitive adhesive material;
/b2/ pressing first the uncovered face of the layer of pressure-sensitive adhesive material against the single- or multi-layer structure (2) that incorporates the polarising film, through the other of the two peelable packaging films of said layer of adhesive material;
/c2/ peeling off the other of the two packaging films so as to uncover the other face of the layer of pressure-sensitive adhesive material; then
/d2/ pressing said other uncovered face of the layer of pressure-sensitive material against the surface of the ophthalmic lens (1), through said single- or multi-layer structure (2) that incorporates the polarising film.

3. Process according to Claim 1 or 2, wherein the polarising film (2a) is based on polyvinyl alcohol or polyethylene terephthalate.

4. Process according to any one of the preceding claims, wherein the single- or multi-layer structure (2) that incorporates the polarising film furthermore comprises at least one film (2b) for protecting the polarising film (2a).

5. Process according to Claim 4, wherein the protecting film (2b) is based on cellulose triacetate, cellulose acetate butyrate, polyethylene terephthalate, polycarbonate or polyamide.

6. Process according to Claim 4 or 5, wherein the protecting film (2b) is placed on a side of the polarising film (2a) that is opposite the ophthalmic lens (1) in the polarising optical element that is manufactured.

7. Process according to Claim 6, wherein the single- or multi-layer structure (2) that incorporates the polarising film furthermore comprises at least one functional coating placed on the protecting film (2b), on a side of said protecting film that is opposite the polarising film (2a).

8. Process according to Claim 1 or 2, furthermore comprising at least one functional coating placed directly on the polarising film (2a).

9. Process according to any one of Claims 4 to 7, wherein the single- or multi-layer structure (2) that incorporates the polarising film comprises two protecting films (2b, 2c) placed on each side of the polarising film (2a).

10. Process according to Claim 9, wherein the two protecting films (2b, 2c) are identical.

11. Process according to Claim 9, wherein the two protecting films (2b, 2c) are different.

12. Process according to any one of the preceding claims, wherein the pressure-sensitive adhesive material is chosen from a compound based on polyacrylate and a styrene-based block copolymer.

13. Process according to Claim 12, wherein the pressure-sensitive adhesive material is a polyacrylate.

14. Process according to any one of the preceding claims, wherein the single- or multi-layer structure (3) that comprises the layer of pressure-sensitive adhesive material possesses a thickness comprised between 0.5 and 300 microns.

15. Process according to Claim 14, wherein the single- or multi-layer structure (3) that comprises the layer of pressure-sensitive adhesive material possesses a thickness comprised between 2 and 100 microns.

16. Process according to any one of the preceding claims, wherein the single- or multi-layer structure (3) that comprises said at least one layer of pressure-sensitive adhesive material comprises two optical-quality adhesive layers consisting of a first and a second pressure-sensitive adhesive material, respectively, and an interlayer film, a first of said two layers of adhesive material being placed between the ophthalmic lens (1) and the interlayer film, and a second of said two layers of adhesive material being placed between said interlayer film and the single- or multi-layer structure (2), in the polarising optical element that is manufactured.

17. Process according to Claim 16, wherein the first pressure-sensitive adhesive material and the second pressure-sensitive material are different.

18. Process according to Claim 16, wherein the first pressure-sensitive adhesive material and the second pressure-sensitive material are identical.

19. Process according to any one of the preceding claims, wherein the single- or multi-layer structure (2) that incorporates the polarising film is located on an anterior face of the ophthalmic lens (1), in the polarising optical element that is manufactured.

20. Process according to Claim 1, furthermore comprising, between steps /a1/ and /b1/, heating said other peelable packaging film bearing the layer of pressure-sensitive adhesive material, so as to soften said other packaging film.

22. Process according to any one of the preceding claims, wherein the single- or multi-layer structure (2) that incorporates the polarising film is preformed before being pressed against the surface of the ophthalmic lens (1).

23. Process according to Claim 22, wherein the single- or multi-layer structure (2) that incorporates the polarising film is preformed with an average radius of curvature larger than an average radius of curvature of the surface of the ophthalmic lens (1).

24. Process according to Claim 22 or 23, wherein the preforming of the single- or multi-layer structure (2) that incorporates the polarising film comprises thermoforming.

25. Process according to one of Claims 22 to 24 together with Claim 2, wherein the single- or multi-layer structure (2) that incorporates the polarising film is preformed with the single- or multi-layer structure (3) that comprises the layer of pressure-sensitive material, after said layer of pressure-sensitive adhesive material has been pressed against said single- or multi-layer structure (2) that incorporates the polarising film, and before the layer of adhesive material (3) is pressed against the ophthalmic lens (1) through the single- or multi-layer structure (2) that incorporates the polarising film.

26. Process according to any one of the preceding claims, wherein the polarising film (2a) is moistened before the single- or multi-layer structure (2) that incorporates the polarising film is pressed against the ophthalmic lens (1).

27. Process according to any one of the preceding claims, wherein the polarising optical element is heated after the single- or multi-layer structure (2) that incorporates the polarising film has been pressed against the ophthalmic lens (1), so as to decrease stresses present in the single- or multi-layer structure (2) that incorporates the polarising film.
